# EUROPEAN PATENT SPECIFICATION

(11) **EP 2 929 091 B1**
(45) Date of publication and mention of the grant of the patent: **27.09.2017**
(21) Application number: 13818849.5
(22) Date of filing: 10.12.2013
(51) Int. Cl.: E02B 3/26

(54) **HYDRAULIC FENDER APPARATUS**
HYDRAULISCHE STOSSSTANGENVORRICHTUNG
APPAREIL DE PARE-CHOCS HYDRAULIQUE

(30) Priority: 10.12.2012 SE 1200758; 21.03.2013 SE 1350591
(43) Date of publication of application: 14.10.2015
(73) Proprietor: Kadeby, Nils-åke, 131 72 Nacka (SE)
(72) Inventor: Kadeby, Nils-åke, 131 72 Nacka (SE)
(74) Representative: Zacco Sweden AB
(86) International application number: PCT/SE2013/051480
(87) International publication number: WO 2014/092634

(56) References cited:
- WO-A1-92/22710
- GB-A- 741 901
- GB-A- 758 566
- US-A- 2 952 979
- US-A- 3 890 917
- US-A- 4 137 861

## Description

### BACKGROUND OF THE INVENTION AND PRIOR ART

The present invention relates to a fender apparatus according to the preamble of claim 1 and a method for shock absorbing operation of a fender apparatus during a collision between two objects according to the designation of claim 10. Fender apparatuses are used to facilitate berthing of a vessel at a landing stage/quay. When a vessel berths and collides with a quay, the vessel's kinetic energy causes an impact, which can be experienced as unpleasant for people both onboard the vessel and on the quay. The impact may also cause damage to the vessel and the quay. The purpose of the fender apparatus is to dampen the impact by absorbing the vessel's kinetic energy. The invention may be attributed to the manufacturing industry of landing stages and/or vessels.

For various reasons problems may arise when a vessel berths at a quay and the speed of the vessel may be abnormally high. The higher the speed of the vessel, the greater the kinetic energy the fender apparatus must absorb to dampen the resulting impact. It is important to dampen the impact as much as possible to minimize the risk of injury and to minimize the damage of the vessel and the quay. Fender apparatuses with the purpose to dampen impacts during so-called stem berthing are often heavily exposed and have high demands on damping capacity. During a collision between two objects, a recoiling motion also often arises. This recoiling motion may also be experienced as unpleasant and causes injuries. It is therefore desirable that a fender apparatus is both dampening and minimizes the recoiling motion.

Today there are fender apparatuses which make it easier for vessels to berth at a quay or landing stage. The document JP2001107337 A discloses a fender apparatus comprising an impact receiving plate arranged on a fender, wherein the fender and the plate are arranged at the end of a rod. The rod is, at its second end, connected to a piston rod of an oil damper and can, through the movable piston rod, slide forward and backward relative to the quayside. The fender apparatus absorbs the collision energy, which arises when a vessel collides with the impact receiving plate, partly through the fender and partly by transferring the collision energy to the oil damper by means of the piston rod, and thus the rod, being pushed in the direction of the oil damper. The fender apparatus remains in the retracted position to minimize the distance between the vessel and the quay.

There are also other fender apparatuses comprising both a fender and a damper. Document JP2005002655 A discloses a fender apparatus comprising a hollow fender, which is arranged so that it protrudes from the quay towards the sea. Through the fender is provided a damper, comprising a cylinder and a piston. The cylinder is attached to the outer side of the fender and can be pushed back and forth in relation to the attachment of the fender at the quayside. A pressure receiving plate is arranged at the end of the piston. A second cylinder of the damper is filled with water. The fender apparatus may also be arranged on the vessel. US-A-3 890 917 discloses: a fender apparatus according to the preamble of claim 1. Despite known solutions in the area there is a need to further develop a fender apparatus, which has a dampening effect at both high and low speeds, which has a high energy absorption capacity and which minimizes an upcoming recoiling motion.

### SUMMARY OF THE INVENTION

The object of the present invention is to achieve a fender apparatus, which has a dampening effect at both low and high speeds.

A further object of the invention is to achieve a fender apparatus, which has a high energy absorption capacity.

Yet another object of the invention is to achieve a fender apparatus, which minimizes the recoiling motion of the colliding objects.

These objects are achieved by the fender apparatus of the initially mentioned kind, which is characterized by the features specified in the characterizing part of claim 1. By arranging a main damping device and at least one supplementary damping device, such that they interact with each other and complement each other, there is achieved a fender apparatus, which has a dampening effect at both high and low speeds, which has a high energy absorption capacity and which minimizes the recoiling motion of the colliding objects.

The receiving member is arranged at a first side of the framework, whereas the main damping device and the at least one supplementary damping device are arranged at a second side of the framework. The second side is opposite the first side. The fender apparatus is to be arranged on an object for shock absorption when colliding with another object. The receiving member is arranged to receive the colliding object. In this way, the collision force is transferred through the receiving member and the framework, on to the main damping device and the at least one supplementary damping device. The main damping device and the at least one supplementary damping device are arranged in parallel.

The main damping device preferably consists of a D-shaped profile, a U-shaped profile, Ω-shaped profile or a square shaped profile. The deformable main damping device preferably comprises an elastic material, such as rubber, polymer or other. The main damping device is suitably deformable in the way that its original shape can change under the influence of a certain force, such as a collision force. Since the main damping device consists of an elastic material and thus is elastic, the main damping device returns to its original shape when it is no longer under the influence of the deforming force. The deformation of the main damping device is thus not permanent.

The at least one supplementary damping device consists of a hydraulic or pneumatic damper.

The at least one supplementary damping device suitably comprises a cylinder and a piston rod coaxially arranged inside the cylinder. The cylinder has a first chamber and the piston rod has a second chamber. The piston rod is preferably axially movably arranged inside the cylinder. The axial direction suitably coincides with the main collision direction. Suitably, the piston rod is attached to the framework while the cylinder is attached to one of the colliding objects. The cylinder is preferably rigidly arranged at one colliding object, such that the cylinder's envelope surface abuts against the one colliding object. The cylinder is preferably inserted into the one colliding object. The cylinder preferably has attachment means for securing the cylinder, and thus the entire fender apparatus, to the one colliding object. The attachment means suitably consists of a flange provided on the cylinder, which flange abuts against and attaches the outside of the one colliding object. Since the piston rod is attached to the framework, the receiving member and the framework are movably arranged relative to the colliding object to which the cylinder is attached. A fluid can flow between the first chamber of the cylinder and the second chamber of the piston rod.

When the fender apparatus is in an unaffected state, when no collision exists, the main damping device is preferably undeformed and has its original shape. The main damping device preferably abuts against the colliding object on which the cylinder is attached. Further, the at least one supplementary damping device is in its original position wherein the first chamber and the second chamber are partially filled with the fluid. When the at least one supplementary damping device is in its original position the piston rod abuts against a stop member arranged at the cylinder. Preferably, the stop member limits the axial movement of the piston rod in the direction away from the colliding object on which the cylinder is attached. Suitably, the stop member is annular and surrounds the piston rod. Suitably, the stop member is arranged on the attachment means of the cylinder.

In collisions at low speeds the fender apparatus preferably is dampening mainly by the main damping device being deformed and thereby absorbing the colliding object's kinetic energy. Low speeds suitably refer to speeds less than or equal to 2 knots. When the main damping device is deformed, the piston rod is at the same time slowly pushed inwards in the cylinder, causing a pressure on the fluid in the first chamber. The pressure causes the fluid to flow from the first chamber to the second chamber, and the resulting kinetic energy of the fluid is transformed into heat. A low collision speed preferably results in that the at least one supplementary damping device essentially does not absorb any energy. This minimizes the load on the at least one supplementary damping device and its service life increases.

In collisions at high speeds, the fender apparatus is exposed to a higher force than in collisions at low speeds and a greater dampening is required. High speeds suitably refer to speeds higher than 2 knots. The collision force causes the main damping device to be deformed but it cannot absorb all collision energy. The piston rod in the at least one supplementary damping device is pushed with greater force inwards in the cylinder and is pressed against the fluid present in the first chamber of the cylinder. The force on the piston rod is transformed to a pressure on the fluid in the first chamber, which pressure accelerates the flow of the fluid from the first chamber to the second chamber. The kinetic energy of the fluid is transformed by viscosity loss to internal heat in the fluid and the collision energy is thus absorbed. The higher the speed of the colliding object, the greater the force affecting the piston rod, the greater the pressure affecting the fluid in the first chamber and the greater the acceleration of the fluid flowing to the second chamber. In this way is achieved a fender apparatus which has a dampening effect at both high and low speeds and which has a high energy absorption capacity.

Preferably the cylinder has a protrusion protruding inwards in the cylinder, which protrusion is partly surrounded by the piston rod. Preferably, the fluid flows between the first chamber of the cylinder and the second chamber of the piston rod through a gap provided between the piston rod and the protrusion protruding in the cylinder. Suitably, a bushing is arranged in an opening in the bottom of the piston rod, wherein the opening and the bushing surrounds the protrusion. Preferably, the bushing is replaceable and its hole diameter may vary so as to vary the size of the gap. By changing the size of the gap, the absorption capacity of the at least one supplementary damping device can be changed. Alternatively, the bushing is arranged so that it fits tightly against the protrusion and the fluid flows between the first and the second chamber through a plurality of small openings in the bottom of the piston rod.

Preferably, the movement of the piston rod inwards in the cylinder is not limited by any mechanical stop but is stopped when the second chamber is filled with fluid so that the pressure inside the second chamber results in no more fluid being able to flow from the first chamber of the cylinder into the second chamber of the piston rod.

Preferably, the main damping device and the at least one supplementary damping device are configured and arranged so that when the main damping device is maximally deformed during collision, the first chamber of the cylinder still holds a certain volume. That is, the movement of the piston rod inwards in the cylinder is limited by the main damping device. This prevents the piston rod from hitting the interior end (bottom) of the cylinder, thus reducing wear and tear of the at least one supplementary damping device.

Preferably, the main damping device wants to automatically return to its original undeformed shape after the collision. By arranging (attaching) both the main damping device and the piston rod at the framework, the piston rod and the cylinder are pulled apart in axial direction when the main damping device returns and the at least one supplementary damping device returns to its original position. When the piston rod and the cylinder are pulled apart fluid flows from the second chamber to the first chamber. This way, inertia of the movement of the piston rod is achieved, which decelerates the return of the main damping device. This way, a controlled return of the fender apparatus is achieved and the recoiling motion is minimized. The interaction between the main damping device and the at least one supplementary damping device also results in an automatic return of the at least one supplementary damping device when the main damping device returns to its original shape.

The fender apparatus suitably comprises two supplementary damping devices in conjunction with the main damping device. Preferably, the two supplementary damping devices are arranged in parallel with the main damping device. The main damping device is suitably arranged intermediate the two supplementary damping devices.

The fluid suitably consists of oil. Alternatively, the fluid consists of gas (air) or water.

Preferably, the receiving member consists of a flat rubber pad to minimize the risk of causing damage to colliding object. Alternatively, the receiving member consists of a wavy profile of an elastic material, such as rubber.

The fender apparatus is suitably arranged on a landing stage or quay. Alternatively, the fender apparatus is arranged on a vessel, such as a ferry. The fender apparatus is thus adapted to be arranged on one of the objects for use during stem berthing of ferries for passenger traffic.

Fluid can suitably be refilled, replaced or emptied through a valve assembly arranged on the protrusion protruding in the cylinder. Preferably, the valve assembly is arranged centrally at the end of the protrusion.

These objects are achieved with the method of claim 10. Further advantages of the invention appear from the following detailed description.

### BRIEF DESCRIPTION OF THE DRAWINGS

In the following examples of the invention are described with reference to the accompanying drawings, in which:
- Fig. 1: shows a cross-sectional view of a fender apparatus according to an embodiment of the present invention,
- Fig. 2: shows a side view of a fender apparatus according to fig. 1,
- Fig. 3a: shows a side view of a fender apparatus according to fig. 1 in an unaffected state,
- Fig. 3b: shows a side view of a fender apparatus according to fig. 1 in a collision state,
- Fig. 4: shows a section of a fender apparatus according to a further embodiment of the present invention, and
- Fig. 5: shows a flow chart for a method pertaining to a fender apparatus.

### DETAILED DESCRIPTION OF THE INVENTION

The present invention will now be described as embodiments. For clarity, the components irrelevant to the invention have been omitted in the drawing. The same details as shown in several drawings may sometimes lack reference numerals, but correspond to those with reference numerals.

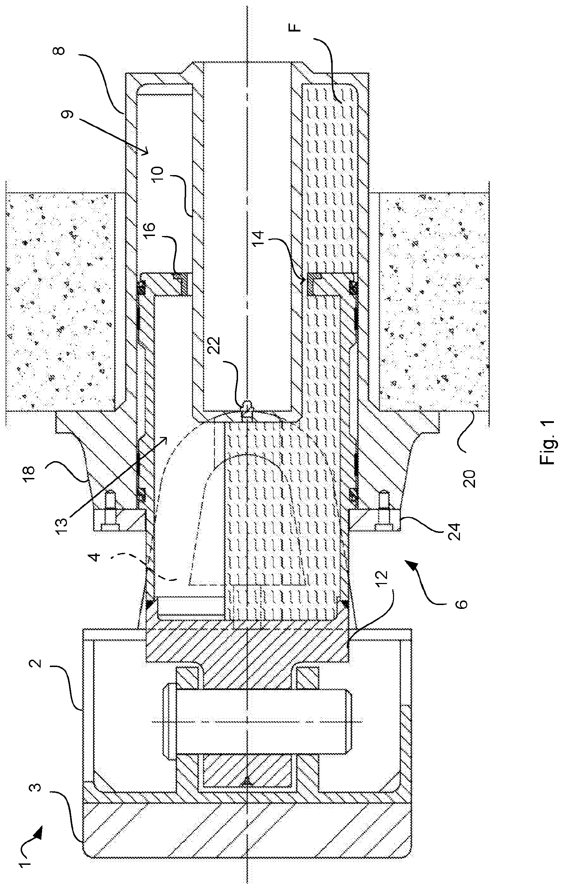

Fig.1 shows a cross-sectional view of a fender apparatus 1 for shock absorption during a collision between two objects according to a preferred embodiment of the present invention. The fender apparatus 1 comprises a framework 2 having a receiving member 3. The receiving member 3 is preferably a rubber pad arranged at a first side of the framework 2. The receiving member 3 is preferably adapted to receive and thus abut against one of the colliding objects during collision. At a second side of the framework 2, preferably opposite the side on which the receiving member 3 is arranged, a main damping device 4 is arranged. The main damping device 4 is preferably a D-shaped profile, which is deformable and which automatically returns to its original shape after deformation. Further, at least one supplementary damping device 6 is arranged connected to the framework 2, on the same side as the main damping device 4. The main damping device 4 and the at least one supplementary damping device 6 are suitably arranged in parallel. The at least one supplementary damping device 6 is preferably a hydraulic damper and comprises a cylinder 8, which has a protrusion 10, protruding inside the cylinder 8. The cylinder 8 also has an attachment means 18 for attaching the cylinder 8, and thus the fender apparatus 1, to a colliding object 20. The attachment means 18 is preferably a flange of the cylinder 8. The cylinder 8 is preferably inserted into the colliding object 20, wherein the attachment means 18 abuts against the exterior of the colliding object 20. The colliding object 20, on which the fender apparatus 1 is arranged, preferably consists of a landing stage/quay. Alternatively, the colliding object 20 consists of a vessel. The at least one supplementary damping device 6 further comprises a piston rod 12 which is arranged coaxially inside the cylinder 8. The piston rod 12 is movably arranged in axial direction inside the cylinder 8 and is in one end connected to (attached to) the framework 2. In this way, the receiving member 3 and the framework 2 are movably arranged relative to the colliding object 20. The cylinder 8 has a first chamber 9 and the piston rod 12 has a second chamber 13. The piston rod 12 surrounds the protrusion 10 in the cylinder 8 through an opening in the bottom of the piston rod 12. Upon axial movement of the piston rod 12 inwards in the cylinder 8, the piston rod 12 surrounds a larger part of the protrusion 10. In the opening of the piston rod 12 a bushing 16 is preferably arranged, between which bushing 16 and the protrusion 10 a gap 14 is provided. The size of the gap 14 is determined by the size of the hole diameter of the bushing 16. Inside the first chamber 9 of the cylinder 8 and the second chamber 13 of the piston rod 12 is a fluid F, which can flow between the first chamber 9 and the second chamber 13, through the gap 14. A valve assembly 22 is arranged at the protrusion 10 for refilling and/or emptying of the fluid F. Preferably, the valve assembly 22 is arranged centrally in a portion of the protrusion 10 which is always surrounded by the piston rod 12. An annular stop member 24 is arranged on the attachment means 18 of the cylinder 8, surrounding the piston rod 12. The stop member 24 has the purpose of limiting the axial movement of the piston rod 12, in the direction away from the colliding object 20, to which the cylinder 8 is attached. When the piston rod 12 abuts against the stop member 24, the at least one supplementary damping device is in its original position.

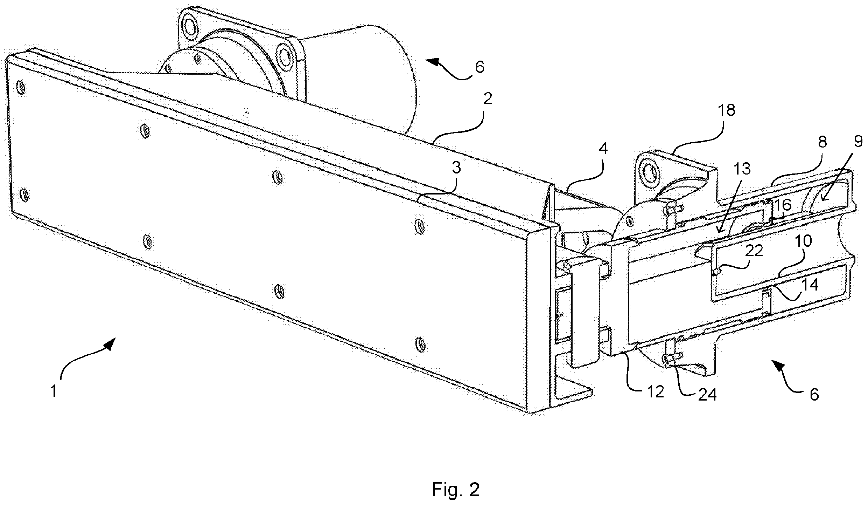

Fig.2 shows a side view of the fender apparatus 1 according to fig. 1 in which a further supplementary damping device 6 is arranged connected to the framework 2. The fender apparatus 1 according to fig. 2 shows an unaffected state when no collision exists between the object 20 on which the fender apparatus is arranged, and another object.

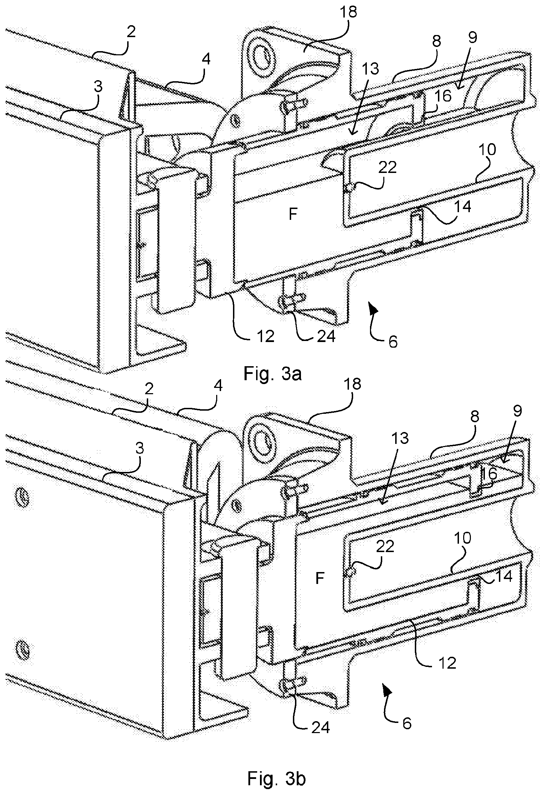

Fig. 3a shows a side view of the fender apparatus 1 according to fig. 1 in an unaffected state, while fig. 3b shows the fender apparatus 1 according to fig. 1 during a collision. When the fender apparatus 1 is in an unaffected state, when no collision exists, the main damping device 4 is undeformed and abuts against the colliding object 20, the at least one supplementary damping device 6 is in its original position and the first chamber 9 and second chamber 13 are partially filled with the fluid F. Preferably, the volume of fluid of the at least one supplementary damping device 6, in its original position, is the volume of the total space minus the volume change corresponding to a movement of the piston rod 12 inwards into the cylinder 8. In collisions at low speeds the fender apparatus 1 is dampening mainly by the main damping device 4 being deformed and thereby absorbing the collision energy. A colliding object, such as a ferry, collides with the fender apparatus 1 arranged on the colliding object 20, such as a landing stage. The receiving member 3 and the framework 2 are subjected to a collision force and push the main damping device 4 against the colliding object 20, causing the main damping device 4 to be compressed and absorb the collision energy. The at least one supplementary damping device 6 is simultaneously affected by the receiving member 3 and the framework 2 pushing the piston rod 12, which is moved in axial direction inwards in the cylinder 8 and pushes against the fluid F that is present in the first chamber 9 of the cylinder 8. The fluid F thus flows from the first chamber 9 to the second chamber 13. At slow speeds, the piston rod 12 is exposed to a limited force, resulting in a relatively low pressure on the fluid F. This way, a low collision speed preferably results in the at least one supplementary damping device 6 essentially not absorbing any collision energy. This reduces the wear of the at least one supplementary damping device 6, which prolongs its service life. In collisions at high speeds, the fender apparatus is exposed to a greater force. The force causes the main damping device 4 to be compressed but it cannot absorb all collision energy. The at least one supplementary damping device 6 is activated by the piston rod 12 being pressed axially inwards in the cylinder 8 and the bottom of the piston rod 12 pushes against the fluid F present in the first chamber 9 of the cylinder 8. The force on the piston rod 12 is transformed into a pressure on the fluid F and thus is the flow of the fluid F from the first chamber 9 to the second chamber 13 accelerated. The kinetic energy of the fluid F is transformed by viscosity loss to heat and the collision energy is absorbed. The higher the speed of the colliding object, the greater the pressure exerted on the fluid F, the greater the acceleration of the fluid F which flows from the first chamber 9 to the second chamber 13 and the greater the energy absorption. The movement of the piston rod 12 inwards in the cylinder 8 is preferably not limited by any mechanical stop, but is stopped when the second chamber 13 is filled with fluid F so that the pressure inside the second chamber 13 results in no more fluid F being able to flow from the first chamber 9 of the cylinder 8 into the second chamber 13 of the piston rod 12.

After the collision according to fig. 3b the main damping device 4 wants to return to its original undeformed shape. Since the main damping device 4 is attached to the framework 2, the return of the main damping device 4 to its original shape causes the framework 2 to move in the direction away from the colliding object 20. Since the piston rod 12 also is attached to the framework 2, the return of the main damping device 4 thus causes the piston rod 12 to move in the direction away from the colliding object 20. The piston rod 12 and the cylinder 8 are this way pulled apart in the axial direction and the at least one supplementary damping device 6 returns to its original position. When the piston rod 12 and the cylinder 8 are pulled apart, the fluid F flows from the second chamber 13 to the first chamber 9. The movement of the fluid F results in an inertia of the axial movement of the piston rod 12, which decelerates the motion of the framework 2 in a direction away from the colliding object 20. This causes the return of the main damping device 4 to decelerate. This way is achieved a controlled return of the fender apparatus 1 and a recoiling motion is minimized, which reduces the risk of damage on the collision objects and minimizes the risk of personal injuries of humans that are present on the collision objects.

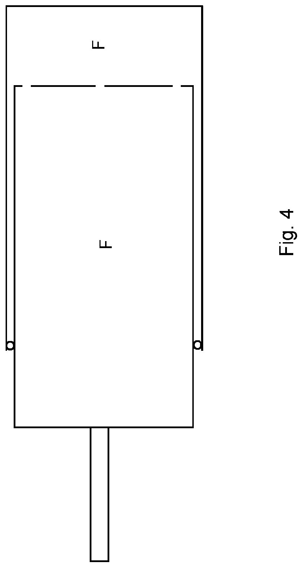

Fig. 4 shows a cross-sectional view of a supplementary damping device of a fender apparatus 1 for shock absorption during a collision between two objects, according to an embodiment of the present invention. This supplementary damping device 6 consists of a pneumatic damper where the fluid F includes gas.

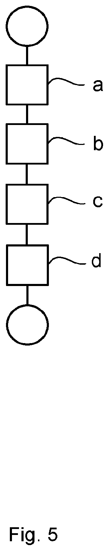

Fig. 5 shows a method pertaining to a fender apparatus for shock absorption during a collision between two objects, which fender apparatus 1 comprises a framework 2 having a receiving member 3, a deformable main damping device 4 arranged to automatically return to its original shape after deformation, and at least one supplementary damping device 6. The method comprises the steps (a) to receive a collision force from the colliding object by means of the receiving member 3, (b) to absorb the kinetic energy of the colliding object by means of the main damping device 4, by compressing the main damping device 4, which is arranged at the framework 2 on the side opposite to the receiving member 3, and (c) to absorb the remaining kinetic energy (excess kinetic energy) with the at least one supplementary damping device 6, which is arranged at the framework 2 on the same side as the main damping device 4, by transforming the excess kinetic energy into heat. Further, the method includes the step (d) to counteract a recoiling motion when the main damping device 4 after deformation wants to return to its original shape, by interaction between the main damping device 4 and the at least one supplementary damping device 6 arranged on the same side.

The present invention should not be limited to the above-described embodiments, but modifications and combinations thereof can occur within the invention. For example, the fender apparatus may comprise four hydraulic dampers or more. In addition to pneumatic and hydraulic dampers, electromagnetic dampers may used. The opposite side of the framework may refer to the side of the framework facing away from the object that collides with (hits) the fender apparatus. That is, the side opposite to the receiving member of the framework.

## Claims

1. Fender apparatus for shock absorption during a collision between two objects, wherein the fender apparatus (1) is adapted to be arranged on one of the objects (20) for use during stem berthing of ferries for passenger traffic, the fender apparatus (1) comprising a framework (2), a receiving member (3) arranged at a first side of the framework (2), a deformable main damping device (4), which is arranged to automatically return to its original shape after deformation, and at least one supplementary damping device (6), the main damping device (4) and the at least one supplementary damping device (6) being arranged in parallel at the framework (2), at an opposite side to the receiving member (3), wherein the at least one supplementary damping device (6) consists of a hydraulic or pneumatic damper, **characterized by** the main damping device (4) being arranged to abut against the colliding object (20) on which the fender apparatus is adapted to be arranged when the fender apparatus (1) is arranged on said colliding object (20), wherein the receiving member (3) and the framework (2) are adapted to be subject to a collision force and thereby push the main damping device (4) against said colliding object (20), such that the main damping device (4) is compressed and absorbs the collision energy.

2. Fender apparatus according to claim 1, wherein the main damping device (4) and the at least one supplementary damping device (6) interact and are arranged such that the at least one supplementary damping device (6) decelerates the automatic return of the main damping device (4) to its original shape.

3. Fender apparatus according to claim 1 or 2, wherein the return of the main damping device (4) to its original shape causes the at least one supplementary damping device (6) to return to an original position.

4. Fender apparatus according to any of the preceding claims, wherein the main damping device (4) consists of a D-shaped profile.

5. Fender apparatus according to any of the preceding claims, wherein the at least one supplementary damping device (6) comprises a cylinder (8), which has a first chamber (9), and piston rod (12) having a second chamber (13), which piston rod (12) is movably arranged inside the cylinder (8), wherein a fluid (F) can flow between the first chamber (9) and the second chamber (13).

6. Fender apparatus according claim 5, wherein the cylinder (8) has a protrusion (10) protruding inwards in the cylinder (8), which protrusion (10) is partially surrounded by the piston rod (12).

7. Fender apparatus according claim 6, wherein the fluid (F) flows between the first chamber (9) and the second chamber (13) through a gap (14) provided between an opening in the bottom of the piston rod (12) and the protrusion (10).

8. Fender apparatus according to any of the preceding claims, wherein the fender apparatus (1) is arranged on a vessel.

9. Fender apparatus according to any of the preceding claims, wherein the fender apparatus (1) is arranged on a landing stage or quay.

10. Method for shock absorbing operation of a fender apparatus during a collision between two objects, wherein the fender apparatus (1) is arranged on one of the objects (20) for use during stem berthing of ferries for passenger traffic, which fender apparatus (1) comprises a framework (2), a receiving member (3) arranged at a first side of the framework (2), a deformable main damping device (4) which is arranged to automatically return to its original shape after deformation, and at least one supplementary damping device (6), wherein the at least one supplementary damping device (6) consists of a hydraulic or pneumatic damper, the main damping device (4) being arranged at the framework (2) on an opposite side in relation to the receiving member (3), wherein the main damping device (4) abuts against the colliding object (20) on which the fender apparatus (1) is arranged, wherein the method comprises the steps of:
- receiving a collision force from a colliding object by means of the receiving member (3),
- absorbing the kinetic energy of the colliding object by means of the main damping device (4), by pushing the main damping device (4) against said colliding object (20), such that the main damping device (4) is compressed and absorbs the collision energy,
- absorbing excess energy with the at least one supplementary damping device (6), which is arranged at the framework (2) on the same side as the main damping device (4), in parallel with the main damping device (4), by transforming the excess energy into heat,
- counteracting the recoiling motion when the main damping device (4) wants to return to its original shape after deformation, by interaction between the main damping device (4) and the at least one supplementary damping device (6) arranged on the same side.

## Patentansprüche

1. Stoßstangenvorrichtung zur Stoßabsorbierung während einer Kollision zwischen zwei Objekten, wobei die Stoßstangenvorrichtung (1) dazu ausgebildet ist, an einem der Objekte (20) zur Verwendung während des Anlegens von Fähren für Personenverkehr angeordnet zu werden, wobei die Stoßstangenvorrichtung (1) einen Rahmen (2), ein an einer ersten Seite des Rahmens (2) angeordnetes Aufnahmeelement (3), eine verformbare Hauptdämpfungseinrichtung (4), welche dazu ausgebildet ist, nach der Verformung selbsttätig in ihre ursprüngliche Form zurückzukehren, und mindestens eine zusätzliche Dämpfungseinrichtung (6) umfasst, wobei die Hauptdämpfungseinrichtung (4) und die mindestens eine zusätzliche Dämpfungseinrichtung (6) an dem Rahmen (2) parallel, an einer in Bezug auf das Aufnahmeelement (3) entgegengesetzten Seite, angeordnet sind, wobei die mindestens eine zusätzliche Dämpfungseinrichtung (6) aus einem hydraulischen oder pneumatischen Dämpfer besteht, **dadurch gekennzeichnet dass** die Hauptdämpfungseinrichtung (4) angeordnet ist, um an dem Kollisionsobjekt (20) anzuliegen, bei dem es vorgesehen ist, dass die Stoßstangenvorrichtung an diesem angeordnet wird, wenn die Stoßstangenvorrichtung (1) an dem Kollisionsobjekt (20) angeordnet wird, wobei das Aufnahmeelement (3) und der Rahmen (2) dazu angepasst sind, einer Kollisionskraft zu unterliegen und somit die Hauptdämpfungseinrichtung (4) gegen das Kollisionsobjekt (20) derart zu drücken, dass die Hauptdämpfungseinrichtung (4) komprimiert wird und die Kollisionsenergie absorbiert.

2. Stoßstangenvorrichtung nach Anspruch 1, wobei die Hauptdämpfungseinrichtung (4) und die mindestens eine zusätzliche Dämpfungseinrichtung (6) interagieren und derart angeordnet sind, dass die mindestens eine zusätzliche Dämpfungseinrichtung (6) das selbsttätige Zurückkehren der Hauptdämpfungseinrichtung (4) in ihre ursprüngliche Form verlangsamt.

3. Stoßstangenvorrichtung nach Anspruch 1 oder 2, wobei das Zurückkehren der Hauptdämpfungseinrichtung (4) in ihre ursprüngliche Form bewirkt, dass die mindestens eine zusätzliche Dämpfungseinrichtung (6) in eine ursprüngliche Position zurückkehrt.

4. Stoßstangenvorrichtung nach einem der vorgehenden Ansprüche, wobei die Hauptdämpfungseinrichtung (4) aus einem D-förmigen Profil besteht.

5. Stoßstangenvorrichtung nach einem der vorgehenden Ansprüche, wobei die mindestens eine zusätzliche Dämpfungseinrichtung (6) einen Zylinder (8), der eine erste Kammer (9) aufweist, und eine Kolbenstange (12), die eine zweite Kammer (13) aufweist, umfasst, welche Kolbenstange (12) im Inneren des Zylinders (8) beweglich angeordnet ist, wobei ein Fluid (F) zwischen der ersten Kammer (9) und der zweiten Kammer (13) strömen kann.

6. Stoßstangenvorrichtung nach Anspruch 5, wobei der Zylinder (8) einen Vorsprung (10) aufweist, der nach innen in den Zylinder (8) ragt, welcher Vorsprung (10) von der Kolbenstange (12) teilweise umgeben ist.

7. Stoßstangenvorrichtung nach Anspruch 6, wobei das Fluid (F) zwischen der ersten Kammer (9) und der zweiten Kammer (13) durch einen zwischen einer Öffnung im Boden der Kolbenstange (12) und dem Vorsprung (10) vorgesehenen Spalt (14) strömt.

8. Stoßstangenvorrichtung nach einem der vorgehenden Ansprüche, wobei die Stoßstangenvorrichtung (1) an einem Schiff angeordnet ist.

9. Stoßstangenvorrichtung nach einem der vorgehenden Ansprüche, wobei die Stoßstangenvorrichtung (1) an einem Landungssteg oder Kai angeordnet ist.

10. Verfahren zum Stoßabsorbierungsbetrieb einer Stoßstangenvorrichtung während einer Kollision zwischen zwei Objekten, wobei die Stoßstangenvorrichtung (1) an einem der Objekte (20) zur Verwendung während des Anlegens von Fähren für Personenverkehr angeordnet ist, welche Stoßstangenvorrichtung (1) einen Rahmen (2), ein an einer ersten Seite des Rahmens (2) angeordnetes Aufnahmeelement (3), eine verformbare Hauptdämpfungseinrichtung (4), die dazu ausgebildet ist, nach der Verformung in ihre ursprüngliche Form zurückzukehren, und mindestens eine zusätzliche Dämpfungseinrichtung (6) umfasst, wobei die mindestens eine zusätzliche Dämpfungseinrichtung (6) aus einem hydraulischen oder pneumatischen Dämpfer besteht, wobei die Hauptdämpfungseinrichtung (4) am Rahmen (2) an einer relativ zum Aufnahmeelement (3) entgegengesetzten Seite angeordnet ist, wobei die Hauptdämpfungseinrichtung (4) an dem Kollisionsobjekt (20) anliegt, an welchem die Stoßstangenvorrichtung (1) angeordnet ist, wobei das Verfahren die folgenden Schritte umfasst:
- Aufnahme einer aus einem Kollisionsobjekt entstehenden Kollisionskraft mittels des Aufnahmeelements (3),
- Absorbieren der kinetischen Energie des Kollisionsobjektes mittels der Hauptdämpfungseinrichtung (4) durch Drücken der Hauptdämpfungseinrichtung (4) gegen den Kollisionsobjekt (20) derart, dass die Hauptdämpfungseinrichtung (4) komprimiert wird und die Kollisionsenergie absorbiert.
- Absorbieren der überschüssigen Energie durch die mindestens eine zusätzliche Dämpfungseinrichtung (6), welche an dem Rahmen (2) an derselben Seite wie die Hauptdämpfungseinrichtung (4), parallel zu der Hauptdämpfungseinrichtung (4), angeordnet ist, durch Umwandeln der überschüssigen Energie in Wärme,
- Entgegenwirken der zurückspringenden Bewegung, wenn die Hauptdämpfungseinrichtung (4) die Neigung hat, nach der Verformung in ihre ursprüngliche Form zurückzukehren, durch Interagieren zwischen der Hauptdämpfungseinrichtung (4) und der an derselben Seite angeordneten mindestens einen zusätzlichen Dämpfungseinrichtung (6).

## Revendications

1. Dispositif de pare-chocs pour l'absorption de choc lors d'une collision entre deux objets, ledit dispositif de pare-chocs (1) étant adapté pour être arrangé sur l'un des objets (20) à utiliser lors de l'accostage d'avant de transbordeurs pour le trafic de voyageurs, ledit dispositif de pare-chocs (1) comprenant un cadre (2), un élément récepteur (3) arrangé à un premier côté du cadre (2), un dispositif d'amortissement principal déformable (4), qui est agencé pour revenir automatiquement à sa forme d'origine après sa déformation, et au moins un dispositif d'amortissement supplémentaire (6), ledit dispositif d'amortissement principal (4) et au moins un dispositif d'amortissement supplémentaire (6) étant disposés parallèlement sur le cadre (2), d'un côté opposé à l'élément récepteur (3), ledit au moins un dispositif d'amortissement supplémentaire (6) étant constitué d'un dispositif d'amortissement hydraulique ou pneumatique, **caractérisé en ce que** ledit dispositif d'amortissement principal (4) est agencé pour buter contre l'objet en collision (20) sur lequel le dispositif de pare-chocs est adapté pour être arrangé lorsque le dispositif de pare-chocs (1) est arrangé sur ledit objet en collision (20), ledit élément récepteur (3) et le cadre (2) étant adaptés pour être soumis à une force de collision et ainsi pousser le dispositif d'amortissement principal (4) contre l'objet en collision (20), si bien que le dispositif d'amortissement principal (4) est comprimé et absorbe l'énergie de collision.

2. Dispositif de pare-chocs selon la revendication 1, dans lequel le dispositif d'amortissement principal (4) et l'au moins un dispositif d'amortissement supplémentaire (6) interagissent et sont agencés si bien que l'au moins un dispositif d'amortissement supplémentaire (6) décélère le retour automatique du dispositif d'amortissement principal (4) à sa forme originale.

3. Dispositif de pare-chocs selon la revendication 1 ou 2, dans lequel le retour du dispositif d'amortissement principal (4) à sa forme d'origine amène l'au moins un dispositif d'amortissement supplémentaire (6) à revenir à une position d'origine.

4. Dispositif de pare-chocs selon l'une quelconque des revendications précédentes, dans lequel le dispositif d'amortissement principal (4) est constitué d'un profil en forme de D.

5. Dispositif de pare-chocs selon l'une quelconque des revendications précédentes, dans lequel l'au moins un dispositif d'amortissement supplémentaire (6) comprend un cylindre (8), qui présente une première chambre (9), et une tige de piston (12) ayant une deuxième chambre (13), ladite tige de piston (12) étant disposée de manière mobile à l'intérieur du cylindre (8), dans lequel un fluide (F) peut s'écouler entre la première chambre (9) et la deuxième chambre (13).

6. Dispositif de pare-chocs selon la revendication 5, dans lequel le cylindre (8) présente une protubérance (10) faisant saillie vers l'intérieur dans le cylindre (8), ladite saillie (10) étant partiellement entourée par la tige de piston (12).

7. Dispositif de pare-chocs selon la revendication 6, dans lequel le fluide (F) s'écoule entre la première chambre (9) et la deuxième chambre (13) à travers un espace (14) prévu entre une ouverture au fond de la tige de piston (12) et la saillie (10).

8. Dispositif de pare-chocs selon l'une quelconque des revendications précédentes, dans lequel le dispositif de pare-chocs (1) est disposé sur un récipient.

9. Dispositif de pare-chocs selon l'une quelconque des revendications précédentes, dans lequel le dispositif de pare-chocs (1) est disposé sur un palier ou quai.

10. Procédé pour l'opération d'amortissement des chocs d'un dispositif de pare-chocs lors d'une collision entre deux objets, dans lequel le dispositif de pare-chocs (1) est arrangé sur l'un des objets (20) à utiliser lors de l'accostage d'avant de transbordeurs pour le trafic de voyageurs, ledit dispositif de pare-chocs (1) comprenant un cadre (2), un élément récepteur (3) arrangé à un premier côté du cadre (2), un dispositif d'amortissement principal déformable (4), qui est agencé pour revenir automatiquement à sa forme d'origine après sa déformation, et au moins un dispositif d'amortissement supplémentaire (6), ledit au moins un dispositif d'amortissement supplémentaire (6) étant constitué d'un dispositif d'amortissement hydraulique ou pneumatique, ledit dispositif d'amortissement principal (4) étant disposé sur le cadre (2), d'un côté opposé à l'élément récepteur (3), ledit dispositif d'amortissement principal (4) butant contre l'objet en collision (20) sur lequel le dispositif de pare-chocs (1) est arrangé, ledit procédé comprenant les étapes consistant à:
- recevoir une force de collision à partir d'un objet en collision au moyen de l'élément récepteur (3),
- absorber l'énergie cinétique de l'objet en collision au moyen du dispositif d'amortissement principal (4) en poussant le dispositif d'amortissement principal (4) contre ledit objet en collision (20), si bien que le dispositif d'amortissement principal (4) est comprimé et absorbe l'énergie de collision,
- absorber l'excès d'énergie avec au moins un dispositif d'amortissement supplémentaire (6), qui est disposé sur le cadre (2) du même côté que le dispositif d'amortissement principal (4), parallèlement au dispositif d'amortissement principal (4) en transformant l'excès d'énergie en chaleur,
- neutraliser le mouvement de recul lorsque le dispositif d'amortissement principal (4) veut revenir à sa forme d'origine après sa déformation, par interaction entre le dispositif d'amortissement principal (4) et l'au moins un dispositif d'amortissement supplémentaire (6) agencé du même côté.
